(19) **Europäisches Patentamt / European Patent Office / Office européen des brevets**

(11) **EP 3 290 496 A1**

(12) **EUROPEAN PATENT APPLICATION**
published in accordance with Art. 153(4) EPC

(43) Date of publication:
07.03.2018 Bulletin 2018/10

(21) Application number: 16786250.7

(22) Date of filing: 28.03.2016

(51) Int Cl.:
$C10M\ 105/36$ $^{(2006.01)}$    $C10M\ 105/38$ $^{(2006.01)}$
$C10M\ 107/34$ $^{(2006.01)}$    $C10N\ 20/00$ $^{(2006.01)}$
$C10N\ 30/00$ $^{(2006.01)}$    $C10N\ 40/06$ $^{(2006.01)}$
$F16F\ 9/32$ $^{(2006.01)}$

(86) International application number:
PCT/JP2016/059901

(87) International publication number:
WO 2016/174973 (03.11.2016 Gazette 2016/44)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 28.04.2015 JP 2015092137
14.12.2015 JP 2015243375
08.02.2016 JP 2016021693

(71) Applicant: **KYB Corporation**
**Tokyo 105-6111 (JP)**

(72) Inventors:
• **SCHOLZ, Christian**
 **Tokyo 105-6111 (JP)**
• **ITO, Yoshihiro**
 **Tokyo 105-6111 (JP)**
• **KATO, Shinji**
 **Tokyo 105-6111 (JP)**

(74) Representative: **TBK**
**Bavariaring 4-6**
**80336 München (DE)**

(54) **WORKING OIL FOR HYDRAULIC SHOCK ABSORBER, AND HYDRAULIC SHOCK ABSORBER**

(57)    [Problem]
Provided is an operating oil for shock absorber in which influences against rubber materials are controlled.
[Solution]
An operating oil coming into contact with a rubber material, the operating oil containing a polyalkylene glycol and at least one base oil selected from a fatty acid diester, a poly-alfa-olefin, and a lubricating oil classified as GIII in American Petroleum Institute (API).
[Effect]
According to the operating oil, in view of the fact that swelling properties of a rubber material, such as a seal material, etc., are reduced, conventionally used rubber materials can be used without being changed.

Fig.1

**Description**

TECHNICAL FIELD

The present invention relates to an operating oil for hydraulic shock absorber.

In detail, the present invention is concerned with a technology for improving influences of a chemical synthetic oil against a rubber material coming into contact with the chemical synthetic oil, and in more detail, the present invention is concerned with control of swelling of a rubber material by an operating oil composed of a chemical synthetic oil, which is used for shock absorbers and so on, the invention being characterized in that by mixing a base oil having a characteristic of shrinking the rubber material in the chemical synthetic oil, influences of the base oil giving to the rubber material are reduced.

In addition, the present invention relates to an operating oil for shock absorber, which when used particularly for a shock absorber of automobile, is able to improve handling stability at the time of travelling of the automobile, and also even in the case where the automobile travels while receiving a force in the lateral direction due to the matter that a road has minute differences in level, is able to improve riding comfort; and a shock absorber using this operating oil.

BACKGROUND ART

In the automotive technology, swelling and degradation of rubber materials due to lubricating oils are a significant problem from the standpoints of durability of members, leakage of oil, and the like, and improvements have been made from various technological standpoints. Above all, there has been made an approach from the standpoint of material quality of oil seal materials or lubricating oils. For example, with respect to the technology for preventing swelling of oil seal materials, research and development have been made from points of view inclusive of material quality of an oil seal, an additive to be added to the base oil, a composition of the base oil, and so on.

As for the automotive oil seal, use of acrylic rubber (ACM), fluorocarbon rubber (FKM), nitrile rubber, urethane rubber (U), silicone rubber, hydrogenated nitrile rubber, and blended materials thereof, and so on is known. Examples of proposals for improving durability of the rubber material by controlling influences of oils against seal materials, such as swelling properties, etc., include an automotive oil seal including an elastic member having a seal lip part, wherein the elastic member is one obtained by co-coagulating an acrylonitrile butadiene rubber (A) with a fluororesin (B) to obtain a co-coagulated composition and then crosslinking the acrylonitrile butadiene rubber (A), and the fluororesin (B) is a perfluoro polymer (Patent Document 1); and a seal device which is able to maintain cold resistance and heat resistance over a long period of time, is small in swelling of grease due to a base oil, and is highly reliable, and a seal for rolling bearing composed of, as a rubber composition therefor, a rubber composition containing, as a rubber component, a mixed acrylonitrile butadiene rubber of an acrylonitrile butadiene rubber A having an acrylonitrile content of 18 to 26% and an acrylonitrile butadiene rubber B having an acrylonitrile content of 30% or more in a weight ratio of the acrylonitrile butadiene rubber A to the acrylonitrile butadiene rubber B of 70/30 to 90/10 (Patent Document 2).

As improvement examples of swelling properties or oil resistance of rubbers by additives to be added to the lubricating oil or operating oil, there are proposed an additive composition for lubricating oil composed of a phosphorus-containing compound metal salt, which is easy for preparation, does not have adverse influences, such as causing rubber seals to swell, etc., and is excellent in storage stability, wherein the additive composition contains a metal salt of a phosphorus-containing compound having a specified chemical structure in an amount of 10 to 90% by mass on a basis of the total amount of the composition in a hydrocarbon-based solvent selected from a mineral oil, a hydrocarbon-based synthetic oil, and a mixture thereof, the hydrocarbon-based solvent having a kinematic viscosity at 100°C of 0.5 to 4.5 mm$^2$/s, a %$C_A$ of 3 or less, and a sulfur component content of 0.05% by mass or less (Patent Document 3); and an additive composition for lubricating oil containing a metal salt of a phosphorus-containing compound having a chemical structure different from the foregoing chemical structure (Patent Document 4).

As an example by a combination of characteristics of an additive and a base oil, there is proposed a hydraulic operating oil composition for shock absorber having good low-temperature characteristics and low piping resistance, and a low rate of change in damping force with temperature change, and moreover a low swelling rate (rate of volume change) of seal materials, the hydraulic operating oil composition including a base oil compounded of a polymethacrylate-based viscosity index improver whose weight average molecular weight is 200,000 to 600,000 and an amine salt of an acidic phosphate ester, wherein a compounding proportion of the polymethacrylate-based viscosity index improver is 0.1 to 5.0% by mass relative to the total amount of the composition, and a compounding proportion of the amine salt of an acidic phosphate ester is 2.0 to 5.0% by mass relative to the total amount of the composition, and the other properties of the composition include a kinematic viscosity at 40°C of 4 to 8 mm$^2$/s, a Brookfield viscosity at -30°C of 1,000 mPa·s or less, an aniline point of 85 to 110°C, and a viscosity index of 150 or more (Patent Document 5).

In addition, as examples by a composition of base oil, there are proposed a lubricating oil containing, as a main component, at least one diester having a specified structure and having improved low-temperature fluidity and swelling properties of rubber (Patent Document 6); and a lubricating oil for automotive air conditioner using, as a base oil, a polyoxypropylene glycol dialkyl ether compound having an average molecular weight of 600 to 2,000, thereby lowering a swelling ratio relative to an acrylonitrile butadiene rubber (Patent Document 7).

Meanwhile, various vehicles, such as automobiles, etc., are provided with a shock absorber for damping a vibration generated at the time of travelling. In general, the shock absorber includes a cylinder, a piston and a piston rod supporting the piston are provided in the inside of the cylinder, and the inside of the cylinder is separated into two oil chambers by the piston. The piston moves in conformity with retractable movement of the shock absorber, and the oil moves between the two oil chambers. A movement passage of the oil is provided with, as a generation part of damping force, orifices having a relatively narrow channel area, valves, and the like. It has been contemplated to improve a vibration suppressing action by generating a damping force by fluid resistance when passing through those narrow channels and controlling friction in sliding parts of the shock absorber, such as oil seal/piston rod, piston rod/guide bush, piston band/cylinder, etc. (for example, see Patent Document 8).

In the light of the above, the shock absorber utilizes liquid pressure resistance, namely damping force, which is generated when the oil passes at a high speed through some orifices and valves provided in the piston.

Here, when the viscosity of oil is defined as $\mu$, the density of oil is defined as $\rho$, the piston speed is defined as v, and the damping force is defined as F, then the damping force F is expressed by the following relation.

$$F = A(\alpha\mu v + \beta\rho v2)$$

(A is a constant inherent to the shock absorber; and $\alpha$ and $\beta$ are each a constant inherent to the oil.)

A is determined by a form of the shock absorber; and the damping force F is affected by the oil viscosity and density and the piston speed, and the necessary oil viscosity and density will be determined for every form of the shock absorber.

In view of the above-described numerical formula expressing the damping force, it is clear that the oil density is one factor for determining the damping force. There are made some proposals paying attention to the oil density including other purposes.

For example, in view of the matter that a low-density lubricating oil is advantageous for energy conservation, there are proposed a lubricating base oil having a high viscosity index and excellent low-temperature fluidity and a lubricating oil composition using the foregoing base oil, which is excellent in high viscosity index, high shear stability, and high oxidation stability with a high flash point and a low density, wherein the lubricating base oil is a hydrocarbon-based lubricating base oil and has a viscosity index of 130 or more, contains 90% or more of paraffinic components (%CP) by ring analysis, and has a CCS viscosity at -35°C of 3,000 mPa·s or less; and it is also disclosed that the density is preferably 0.84 g/cm³ or less (Patent Document 9) .

In addition, there is proposed a lubricating oil composition for shock absorber, which realizes excellent riding comfort in low-temperature and high-temperature environments and can suppress worsening of riding comfort with time, which is caused by evaporation and shearing of the lubricating oil, the lubricating oil composition containing (A) a base oil having a pour point of lower than -40°C and a kinematic viscosity at 80°C of 2.0 to 2.7 mm²/s, (B-1) 1 to 15% by mass of a polymethacrylate having a weight average molecular weight of 10,000 or more and less than 100,000, and (B-2) 0.1 to 5% by mass of a polymethacrylate having a weight average molecular weight of 100,000 or more and 200,000 or less; and it is disclosed that from the viewpoint of an appropriate damping force, the base oil as the component (A) preferably has a density at 15°C of 0.80 to 0.83 g/cm³ (Patent Document 10).

In addition, there is proposed a lubricating oil composition that is excellent in thermal oxidation stability, lubricating properties, water resistance, and filtration characteristics, the lubricating oil composition having a kinematic viscosity at 40°C of 25 to 53 cSt, a viscosity index of 130 to 150, a density at 15°C of 0.80 to 0.84 g/cm³, and a flash point of 252°C or higher and being blended with a primary amine having a tertiary alkyl group having 8 to 20 carbon atoms; and it is disclosed that by reducing the density, it is possible to reduce the supply pressure loss and simultaneously to improve the flow rate efficiency, and since the supply pressure loss in hydraulic pipe-work is converted to heat and sound, etc., it is suggested that by reducing the density, the generation of heat and noise are also suppressed (Patent Document 11).

CITATION LIST

PATENT DOCUMENT

Patent Document 1: JP-A-2014-178014
Patent Document 2: JP-A-2013-181085
Patent Document 3: JP-A-2011-162723
Patent Document 4: JP-A-2009-227769
Patent Document 5: JP-A-2011-21111
Patent Document 6: JP-A-9-100481
Patent Document 7: JP-A-8-311473
Patent Document 8: JP-A-2000-192067
Patent Document 9: JP-A-2012-180535
Patent Document 10: JP-A-2015-40299
Patent Document 11: JP-A-2004-250504

## SUMMARY OF INVENTION

### TECHNICAL PROBLEM

Among suspension elements of an automobile, a shock absorber is a functional component playing an important role for controllability, stability, and riding comfort. As a structure of the shock absorber, varieties of structures are known. However, the shock absorber is basically composed of a piston and a cylinder, charged with a hydraulic operating oil in the inside thereof, and sealed with a seal material, such as a nitrile rubber, etc., such that the hydraulic operating oil in the inside does not leak out on the sliding surfaces between the piston and the cylinder and between a piston rod and a cylinder; and that the sliding portions are protected. Then, a shock applied from the outside of the automobile is absorbed by a damping force utilizing fluid resistance of the hydraulic operating oil charged in the inside of the shock absorber. The operating oil for shock absorber having such functions is required to have varieties of performances, such as damping force characteristics, low-temperature fluidity, wear resistance, low friction characteristics, seal compatibility, prevention of leakage of oil, etc. In order to satisfy these requirements, there have been made varieties of proposals regarding hydraulic operating oils for shock absorber, additives of operating oil, and seal materials.

Conventionally, in the shock absorber, a rubber material having a material quality in conformity with characteristics of a mineral base oil that is the lubricating oil is used as a seal material. However, the present inventors found out a problem that when such a rubber material is combined with a chemical synthetic oil, there is a possibility that the seal material causes quality degradation, and therefore, it is difficult to use the chemical synthetic oil. Thus, an object of the present invention is to enable one to use even a chemical synthetic oil without changing a current rubber material, by reducing quality degradation to be caused due to swelling properties of the current rubber material.

In addition, conventionally, it is known that for the purpose of absorbing a vibration to be caused due to irregularities of the road surface or the like to improve riding comfort or controllability of an automobile, a shock absorber is used, and the damping force by the shock absorber is affected by the oil viscosity and density and the piston speed. However, details on how the density of oil affects the riding comfort and controllability of the vehicle were unclear. Conventionally, an operating oil having a density of about 0.83 to 0.86 g/cm$^3$ has been usually used for the shock absorber. Under the existing circumstances of the conventional technologies, paying attention to the density of the operating oil that is used for a hydraulic shock absorber of automobile, an object of the present invention was to develop a new technical means for improving riding comfort and controllability by carrying out tests by an actual vehicle.

### SOLUTION TO PROBLEM

In order to enable one to use an existing rubber material without being changed, the present inventors made extensive and intensive investigations. As a result, they have reached an operating oil coming into contact with a rubber material, the operating oil comprising containing a polyalkylene glycol and at least one base oil selected from a fatty acid diester, a poly-alfa-olefin, and a lubricating oil classified as GIII in American Petroleum Institute (API).

That is, the present invention makes it possible to use a chemical synthetic oil as a lubricating oil through a minimum material change of adjusting a composition of the base oil and reduces influences of the chemical synthetic oil giving to a rubber material through mixing of a lubricating oil having such a characteristic that swelling properties of the rubber material by the chemical synthetic oil can be reduced. In accordance with the present invention, it is possible to provide an operating oil which is optimum particularly for a high-density shock absorber and is useful particularly for a lubricating oil including, as a base oil, a fatty acid diester and/or a polyalkylene glycol, and also a shock absorber with improved handling stability and riding comfort.

In addition, in order to improve controllability and riding comfort of automobiles, especially passenger cars, the present inventors paid attention to influences by characteristics of an operating oil that is used for a hydraulic shock absorber and made extensive and intensive research and development. As a result, they have reached an operating oil for hydraulic shock absorber including, as a base oil, a fatty acid diester and/or a polyalkylene glycol, the operating oil comprising having a density of 0.87 g/cm$^3$ or more at a temperature of 15°C. The present invention improves riding comfort and handling stability of automobiles and two-wheeled vehicles, particularly passenger cars by an operating oil for hydraulic shock absorber including, as a base oil, a fatty acid diester and/or a polyalkylene glycol, the operating oil having a density of 0.87 g/cm$^3$ or more at a temperature of 15°C.

Specifically, the gist of the present invention is concerned with an operating oil including, as a base oil, a fatty acid diester and/or a polyalkylene glycol, the operating oil comprising having a density of 0.87 g/cm$^3$ or more at a temperature of 15°C.

BRIEF DESCRIPTION OF DRAWINGS

FIG. 1 shows a volume change of a rubber material in an operating oil and a change in density of an operating oil vs. a proportion of PAG in an operating oil.
FIG. 2 shows the overall evaluation ranges regarding handling stability and riding comfort of operating oils tested for every friction and density.
FIG. 3 shows sensory analysis results in an actual vehicle test regarding operating oils of Example 1-4, in which the density was adjusted.
FIG. 4 shows sensory analysis results in an actual vehicle test regarding operating oils of Example 1-4, in which the friction was adjusted.
FIG. 5 shows the summarized results in the sensory analysis of Example 1-4 as changed by the friction and density.
FIG. 6 shows sensory analysis results in an actual vehicle test regarding operating oils of Example 2-2, in which the density was adjusted.
FIG. 7 shows sensory analysis results in an actual vehicle test regarding operating oils of Example 2-2, in which the friction was adjusted.
FIG. 8 shows the summarized results in the sensory analysis of Example 2-2 as changed by the friction and density.

DESCRIPTION OF EMBODIMENTS

The present invention is concerned with an operating oil for shock absorber coming into contact with a rubber material, the operating oil comprising containing a polyalkylene glycol and at least one base oil selected from a fatty acid diester, a poly-alfa-olefin and a lubricating oil classified as GIII according to the classification of American Petroleum Institute (API), with controlled swelling properties of the rubber material. It has become clear that when a chemical synthetic oil including, as a base oil, a polyalkylene glycol is used as an operating oil for a shock absorber and so on, a rubber material constituting an oil seal or the like is, for example, swollen, whereby its oil resistance is worsened.

The present invention is based on findings that when a fatty acid diester or the like having properties of shrinking a rubber material is contained, swelling and degradation of the rubber material due to an operating oil are prevented from occurring.

In addition, the present invention makes it possible to put a high-density operating oil into practical use, by appropriately setting a mixing ratio between the polyalkylene glycol and the at least one member selected from a fatty acid diester, a poly-alfa-olefin, and a lubricating oil classified as GIII according to the classification of American Petroleum Institute (API), and the operating oil of the present invention is suitable for a shock absorber with improved handling stability and riding comfort of an automobile. Furthermore, the present invention makes it possible to use a chemical synthetic oil without changing a rubber composition of a conventionally used rubber member.

Moreover, the present invention is concerned with an operating oil for hydraulic shock absorber including, as a base oil, a fatty acid diester and/or a polyalkylene glycol, the operating oil comprising having a density of 0.87 g/cm$^3$ or more at a temperature of 15°C. The present invention is able to make both riding comfort and handling stability of an automobile compatible with each other in high levels and makes it possible to improve performances of a vehicle by changing the base oil from a low-density mineral oil which has hitherto been frequently used, to a high-density chemical synthetic oil.

Conventionally, it has been known that the density of the operating oil is related to a damping force of the shock absorber. The present inventors have reviewed in detail any mechanisms in which the density of the operating oil affects the damping force and then reached the present invention. As a result, the damping force is related to a friction force and a hydraulic force. The friction force is affected by a sliding member and an operating oil, and the hydraulic force is affected by a valve and an operating oil. Then, the present inventors have decided to review how the characteristics of the operating oil relating to both the friction force and the hydraulic force affect the damping force.

First of all, among varieties of characteristic values regarding the friction force and the hydraulic force which are considered to be necessary for the operating oil, the present inventors paid attention to the density of the operating oil and set the density higher than a conventional value, thereby obtaining good results. In addition, by setting a coefficient of friction of the operating oil low, an improvement of the damping force could be further achieved.

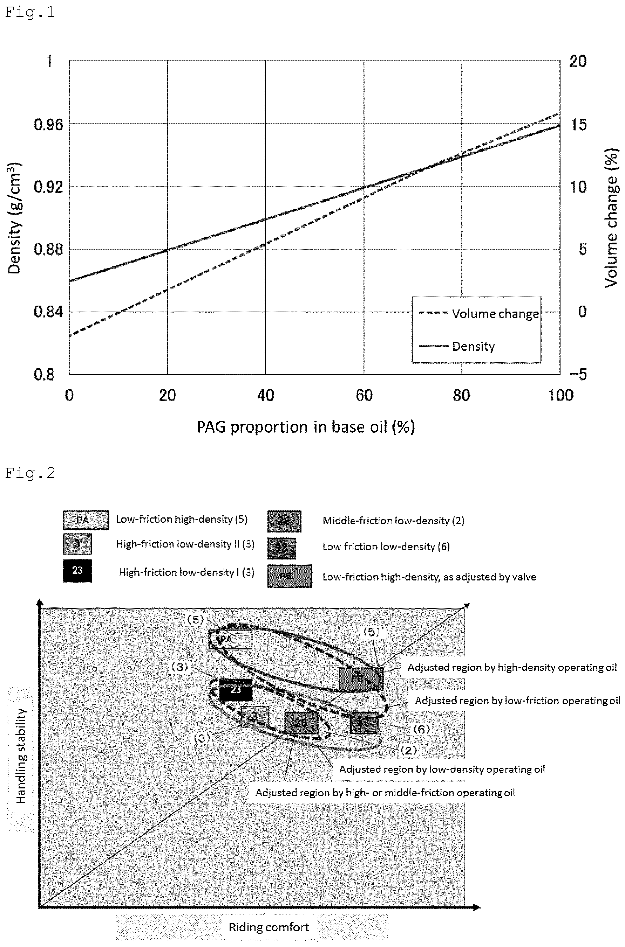

An improvement in oil resistance of the rubber member according to the present invention is specifically described by reference to FIG. 1. FIG. 1 shows a volume change of a rubber material and a change in density of an operating oil vs. a proportion of PAG in a base oil composed of a polyalkylene glycol (PAG) and a fatty acid diester. An abscissa expresses a proportion of PAG in the base oil, and a remaining proportion is related to the fatty acid diester. An ordinate expresses a volume change of the rubber material and a density of the base oil. This test is concerned with the results obtained by dipping an acrylonitrile butadiene rubber in an operating oil of each composition in the drawing at a temperature of 100°C for 72 hours and measuring a volume change thereof and shows swelling properties of the rubber material.

For example, an oil seal that is used for a shock absorber or the like is required to be controlled to +15% or less in terms of a rate of volume change in the operating oil. FIG. 1 explicitly shows that by using PAG as the base oil and blending the fatty acid diester, the rate of volume change is reduced. In this example, it is demonstrated that by adjusting PAG to about 95% by weight or less, the rate of volume change falls within a preferred range, and at the same time, it becomes possible to maintain its density at a high density of up to 0.95 g/cm$^3$.

In the present invention, a proportion of the polyalkylene glycol and the at least one selected from a fatty acid diester, a poly-alfa-olefin, and a lubricating oil classified as GIII in American Petroleum Institute (API) (the both will be hereinafter also referred to simply as "lubricating oil") has only to be a range where the rate of volume change of the rubber material is +15% or less. The proportion of the lubricating oil that is added and mixed for the purpose of maintaining the density of 0.92 g/cm$^3$ or more is preferably in a range of from 60 to 5% by weight, and a preferred range for the purpose of maintaining the density of 0.89 g/cm$^3$ or more is from 40 to 5% by weight.

In the operating oil blended within such numerical value ranges, it is possible to control swelling of the rubber material, and it is also possible to realize a high-density operating oil. An automobile adopting an operating oil for shock absorber having a high density of 0.89 g/cm$^3$ or more is improved in terms of handling stability and riding comfort.

Next, the fatty acid diester and the polyalkylene glycol that are the base oil of the operating oil of the present invention are described.

As the fatty acid diester and the polyalkylene glycol, those having structures described below are used.

[Polyalkylene Glycol (PAG)]

The polyalkylene glycol is, for example, composed of one or more selected from the group consisting of compounds represented by the following general formula.

$$R_1\text{-O-}(R_2\text{-O})_n\text{-}R_3 \qquad \text{(IV)}$$

[In the formula (IV), $R_1$ and $R_3$ may be the same as or different from each other and each represent a hydrogen atom or an alkyl group; $R_2$ represents an alkylene group; and n is preferably an integer such that a average molecular weight of the compound represented by the formula (IV) is 300 to 2, 000.]

In the case where either one or both of $R_1$ and $R_3$ in the formula (IV) are an alkyl group, though the carbon number of the alkyl group may be arbitrarily selected, the carbon number of the alkyl group is preferably 1 to 18, and more preferably 1 to 10. The alkyl group may be either linear or branched. Specifically, examples thereof include a methyl group, an ethyl group, a n-propyl group, an isopropyl group, a n-butyl group, an isobutyl group, a sec-butyl group, a tert-butyl group, a linear or branched pentyl group, a linear or branched hexyl group, a linear or branched heptyl group, a linear or branched octyl group, a linear or branched nonyl group, a linear or branched decyl group, a linear or branched undecyl group, a linear or branched dodecyl group, a linear or branched tridecyl group, a linear or branched tetradecyl group, a linear or branched pentadecyl group, a linear or branched hexadecyl group, a linear or branched heptadecyl group, a linear or branched octadecyl group, and the like.

In addition, though the carbon number of the alkylene group represented by $R_2$ in the formula (IV) is not particularly limited, in general, it is preferably 2 to 10. Specifically, examples of the alkylene group having 2 to 10 carbon atoms may include an ethylene group, a propylene group (inclusive of a 1-methylethylene group and a 2-methylethylene group), a trimethylene group, a butylene group (inclusive of a 1-ethylethylene group and a 2-ethylethylene group), a 1,2-dimethylethylene group, a 2,2-dimethylethylene group, a 1-methyltrimethylene group, a 2-methyltrimethylene group, a 3-methyltrimethylene group, a tetramethylene group, a pentylene group (inclusive of a 1-butylethylene group and a 2-butylethylene group), a 1-ethyl-1-methylethylene group, a 1-ethyl-2-methylethylene group, a 1,1,2-trimethylethylene group, a 1,2,2-trimethylethylene group, a hexylene group (inclusive of a 1-butylethylene group and a 2-butylethylene group), a 1-methyl-1-propylethylene group, a 1-methyl-2-propylethylene group, a 2-methyl-2-propylethylene group, a 1,1-diethylethylene group, a 1,2-diethylethylene group, a 2,2-diethylethylene group, a 1-ethyl-1,2-dimethylethylene group, a 1-ethyl-2,2-dimethylethylene group, a 2-ethyl-1,1-dimethylethylene group, a 2-ethyl-1,2-dimethylethylene group, a 1,1,2,2-tetramethylethylene group, a heptylene group (inclusive of a 1-pentylethylene group and a 2-pentylethylene group), an octylene group (inclusive of a 1-hexylethylene group and a 2-hexylethylene group), a nonylene group (inclusive of a 1-heptylethylene group and a 2-heptylethylene group), a decylene group (inclusive of a 1-octylethylene group and a 2-octylethylene group), and the like.

The compound represented by the formula (IV) may be either a homopolymer in which $R_2$ within the same molecule is a single kind or a copolymer in which $R_2$ within the same molecule is composed of two or more kinds. Furthermore, in the case where the compound represented by the general formula (1) is a copolymer, a ratio of monomers constituting the copolymer and a configuration of the monomers are not particularly limited, and the copolymer may be any of a random copolymer, an alternating copolymer, and a block copolymer.

In the case where the compound represented by the formula (IV) is a homopolymer, $R_2$ is preferably an alkylene group having 4 to 6 carbon atoms, and from the standpoint of easiness of availability of a raw material monomer, $R_2$ is more preferably a butylene group. In addition, in the case where the compound represented by the general formula (IV) is a copolymer, $R_2$ is preferably an alkylene group having 3 to 6 carbon atoms, and furthermore, from the standpoint of easiness of availability of raw material monomers, $R_2$ is more preferably a propylene group or a butylene group.

n in the foregoing formula (IV) is an integer such that a average molecular weight of the compound represented by the general formula (IV) is 300 to 2,000, preferably 500 to 1,800, and more preferably 800 to 1,500.

As for specific examples of the polyalkylene glycol, for example, an alkylene oxide is ethylene oxide, propylene oxide, butylene oxide, or a mixture thereof, and preferably propylene oxide. Preferably, examples of the polyalkylene glycol may include polyethylene glycol, polypropylene glycol, polypropylene glycol monobutyl ether, and polypropylene glycol butyl methyl diether, each having a molecular weight of 1,000 to 5,000, and a decanol compound having a propoxy group and a butoxy group and having a molecular weight of 1,030 or 770. There are included one in which both ends of the molecular chain are an alkyl group; one in which one end of the molecular chain is an alkyl group, with the other end being a hydroxyl group; and one in which both ends of the molecular chain are a hydroxyl group. The carbon number of this terminal alkyl group is 1 to 18.

[Fatty Acid Diester]

Examples of the fatty acid diester that is used in the present invention may include compounds having the following molecular formulae.

[Ester of Fatty Acid as Dibasic Acid and Alcohol]

$$R_1\text{-O-CO-A-CO-}R_2 \qquad\qquad \text{(I)}$$

$$R_1\text{-(O)-(CH}_2)_n\text{-O-CO-A-CO-O-(CH}_2)_n\text{-(O) -}R_2 \qquad\qquad \text{(II)}$$

(A is an alkylene group having 1 to 20 carbon atoms; n is an integer of 0 to 2; and $R_1$ and $R_2$ are each an alkyl group, an aromatic alkyl group, an aromatic group, or an alicyclic group, each of which may have a substituent.)

As a specific example of the fatty acid diester that is used in the present invention, there may be exemplified a fatty acid diester in which a carboxylate ester is bonded to an alkylene group having 1 to 10 carbon atoms or an alkylene group in which oxygen may be included in a main chain thereof. Specifically, the dibasic acid is an acid having 1 to 18 carbon atoms, and examples thereof include adipic acid, azelaic acid, sebacic acid, phthalic acid, succinic acid, glutaric acid, piperic acid, suberic acid, azelaic acid, undecanedioic acid, dodecanedioic acid, brassylic acid, tetradecanedioic acid, and derivatives thereof, and the like.

In addition, examples of the alcohol may include the following alcohols.

As an aliphatic alcohol, there are exemplified methyl alcohol, ethyl alcohol, propyl alcohol, capryl alcohol, and the like; as an aromatic alcohol, there are exemplified phenol, cresol, xylenol, an alkylphenol, benzyl alcohol, phenethyl alcohol, phenoxyethanol, and the like; as an alicyclic alcohol, there are exemplified cyclohexanol, methylcyclohexanol, cyclohexanemethanol, norbornanemethanol, borneol, isoborneol, and the like; as a diol, there are exemplified ethylene glycol, diethylene glycol, triethylene glycol, propylene glycol, dipropylene glycol, tripropylene glycol, neopentyl glycol, 1,4-butanediol, 1,6-hexanediol, and the like; and as a triol, there are exemplified glycerin, trimethylolpropane, and the like.

[Ester of Polyol and Bimolecular Dibasic Fatty Acid]

$$R_1\text{-CO-O-A-O-CO-}R_2 \qquad \text{(III)}$$

Examples may include diesters of ethylene glycol, diethylene glycol, triethylene glycol, propylene glycol, dipropylene glycol, tripropylene glycol, neopentyl glycol, 1,4-butanediol, or 1,6-hexanediol; and a linear or branched fatty acid having 3 to 18 carbon atoms.

Furthermore, specific examples of the fatty acid diester may include dibenzyl isophthalate, phenyl acetic acid diester of diethylene glycol, phenyl acetic diester of butanediol, an ester of phenyl acetic acid and benzoic acid of 1,4-butanediol, benzoic acid diester of 1,4-butanediol, benzoic acid diester of triethylene glycol, benzoic acid diester of tetraethylene glycol, di(1-ethylpropyl) adipate, di(1-ethylpropyl) azelate, di(isobutyl) sebacate, and the like.

In the present invention, with respect to the poly-alfa-olefin and the base oil for lubricating oil classified as GIII in AIP, which are added to and mixed with the base oil, the following are exemplified.

[Poly-alfa-olefin (PAO)]

With respect to the poly-alfa-olefin that is contained in the operating oil of the present invention, the following are exemplified.

The poly-alfa-olefin is a poly-alfa-olefin (poly-$\alpha$-olefin), an alfa-olefin oligomer ($\alpha$-olefin oligomer), or a mixture thereof (poly-alfa-olefin and alfa-olefin oligomer). The poly-alfa-olefin is a polymer of an alfa-olefin (monomer) of every kind. In addition, the poly-alfa-olefin may also be a mixture in which plural "polymers of an alfa-olefin (monomer)" are mixed. In addition, the alfa-olefin oligomer is an oligomer of an alfa-olefin (monomer) of every kind, and an oligomer of a hydrogenated alfa-olefin (monomer) is also included. In addition, the alfa-olefin oligomer may be a mixture in which plural "oligomers of an alfa-olefin (monomer) " are mixed, or may also be a mixture in which plural "oligomers of a hydrogenated alfa-olefin (monomer)" are mixed. In addition, the alfa-olefin oligomer may be a mixture of an "oligomer of an alfa-olefin (monomer)" and an "oligomer of a hydrogenated alfa-olefin (monomer)".

Although the alfa-olefin (monomer) is not particularly limited, examples thereof include ethylene, propylene, butene, an alfa-olefin having 5 or more carbon atoms, and the like. In producing the poly-alfa-olefin or alfa-olefin oligomer, a single kind of the above-described alfa-olefin (monomer) may be used solely, or a combination of two or more kinds may be used. The above-described poly-alfa-olefin may be produced through homopolymerization of a single kind of an alfa-olefin, or may be produced through copolymerization of two or more kinds of alfa-olefins. Namely, the above-described poly-alfa-olefin may be a homopolymer of a single kind of an alfa-olefin (monomer), or may be a copolymer of two or more kinds of alfa-olefins.

[Base Oil for Lubricating Oil Classified as GIII in AIP]

In accordance with API, the base oil for lubricating oil classified as GIII in AIP, which is contained in the operating oil of the present invention, is prescribed such that the sulfur component is 0.03% or less, the saturated component is 90% or more, and the viscosity index is 120 or more. The foregoing base oil is produced by a process on a basis of the hydrogenation treatment, and therefore, it has such characteristic features that the sulfur component is small; the saturated component is large; and it is obtained by decomposing and modifying a raw material derived from a crude oil into a molecular structure suited for the lubricating oil and is little in viscosity change by the temperature (the viscosity index is high).

In the operating oil for shock absorber of the present invention, in which swelling of the rubber material is controlled, for example, the following are exemplified as the rubber material in which swelling properties thereof are controlled.

[Rubber Material]

Since the operating oil of the present invention does not exhibit swelling properties against rubber materials that are conventionally used for an oil seal or the like, the rubber material is not particularly limited, and examples thereof include a nitrile rubber, a hydrogenated nitrile rubber, afluororubber , and the like. However, the fact that the operating oil of the present invention does not have swelling properties against the acrylonitrile butadiene rubber that is conventionally used for an oil seal is a significant advantage because an operating oil containing a fatty acid diester or a polyalkylene glycol may be used without changing the material quality of the oil seal. Next, a composition of the representative nitrile rubber according to the present invention is described.

[Nitrile Rubber (NBR)]

The nitrile rubber (NBR) is a copolymer of butadiene and acrylonitrile and is most widely used among oil-resistant synthetic rubbers. NBR has a very lot of varieties, and its individuality is determined by the acrylonitrile content (combined AN amount) . When the combined AN amount is larger, the oil resistance increases, whereas when it is smaller (the amount of butadiene is larger), the cold resistance increases.

HNBR (hydrogenated nitrile rubber) is obtained through chemical hydrogenation of a residual double bond included in butadiene, which is existent in a polymer main chain of the nitrile rubber (NBR). HNBR is easy to introduce a third monomer other than butadiene and acrylonitrile and varieties of modifications of HNBR are developed. Examples thereof include carboxylated NBR (XNBR) having methacrylic acid introduced thereinto; NBIR in which a part of butadiene is replaced by isoprene; NIR in which all of butadiene is replaced by isoprene; and the like. In order to improve ozone resistance of the nitrile rubber (NBR), there are obtained various products according to a blending ratio, inclusive of one blended with PVC (vinyl chloride) having good compatibility.

The present invention is concerned with an operating oil for hydraulic shock absorber, containing a polyalkylene glycol and a base oil composed of a fatty acid diester or a poly-alfa-olefin, or a lubricating oil classified as GIII in American Petroleum Institute (API), and its density is preferably 0.87 $g/cm^3$ or more at a temperature of 15°C. By allowing the operating oil to have a high density, it is possible to make both riding comfort and handling stability of an automobile compatible with each other in high levels, and at the same time, it is also possible to improve performances of a vehicle by changing the operating oil in which a low-density mineral oil has hitherto been frequently used as the base oil, to a high-density chemical synthetic oil. As described below, the effects that are brought by a high-density operating oil are verified through the tests by an actual vehicle.

Conventionally, it has been known that the density of the operating oil is related to a damping force of the shock absorber. The present inventors have reviewed in detail any mechanisms in which the density of the operating oil affects the damping force and then reached the present invention. The damping force is related to a friction force and a hydraulic force. The friction force is affected by a sliding member and an operating oil, and the hydraulic force is affected by a valve and an operating oil. Then, among varieties of characteristic values regarding the friction force and the hydraulic force which are considered to be necessary for the operating oil relating to both the friction force and the hydraulic force, the present inventors paid attention to the density of the operating oil and set the density higher than a conventional value, thereby obtaining good results. In addition, by setting a coefficient of friction of the operating oil low, an improvement of the damping force could be further achieved.

The details of the density and the friction force of the operating oil are described.

[Comparison in Friction and Density between Operating Oil of the Present Invention and the Conventional Example]

In the present invention, in performing the tests by an actual vehicle, three samples in which the coefficient of friction is substantially equal, and the density is different, and five samples in which the density is fixed, and the coefficient of friction is different were prepared. Specifically, there are provided a low-density middle-friction oil (2), a low-density high-friction oil (3), a middle-density low-friction oil (4), a high-density low-friction oil (5), and a low-density low-friction oil (6) . It is to be noted that the coefficient of friction was measured by means of a Bowden-Leben type reciprocating sliding friction test. A nitrile butadiene rubber-made test piece and a test plate whose surface had been plated with chromium were set at a predetermined position of a Bowden-Leben test machine, and an operating oil was poured between the test piece and the test plate. Then, the test was performed under conditions at a load of 20 N and a sliding speed of 0.06 mm/s, to measure a coefficient of friction.

A commercially available operating oil has a density of 0.85 to 0.86 $g/cm^3$ and a coefficient of friction of about 0.012 to 0.056. The above-described low-density middle-friction oil (2) has a density of 0.84 $g/cm^3$ and a coefficient of friction of 0.018; the low-density high-friction oil (3) has a density of 0.84 $g/cm^3$ and a coefficient of friction of 0.034; the middle-density low-friction oil (4) has a density of 0.89 $g/cm^3$ and a coefficient of friction of 0.008; the high-density low-friction oil (5) has a density of 0.939 $g/cm^3$ and a coefficient of friction of 0.009; and the low-density low-friction oil (6) has a density of 0.839 $g/cm^3$ and a coefficient of friction of 0.010.

The handling stability and the riding comfort obtained by combining the evaluation results of the above-described items of the sensory analysis by an actual vehicle are shown in FIG. 2. An ordinate expresses the handling stability, an abscissa expresses the riding comfort, and it is described in such a manner that when stood far from the origin, the operating oil has a good performance. That is, it is shown that in FIG. 2, when positioned in an upper or more right-side direction, more preferred results were achieved. In FIG. 2, the diagonal line shows a state where the handling stability and the riding comfort are balanced. In FIG. 2, a region where the adjustment may be made by the low-density operating oil and a region where the adjustment may be made by the high-density operating oil are shown by a solid line. What the adjusted region by the high-density operating oil is positioned in an upper part as compared with the adjusted region by the low-density operating oil demonstrates that excellent results were obtained by making the density of the operating oil high. In addition, a region where the adjustment may be made by the low-friction operating oil and a region where the adjustment may be made by the high-friction operating oil are shown by a broken line. What the adjusted region by the low-friction operating oil is positioned in an upper part as compared with the adjusted region by the middle-or high-friction operating oil demonstrates that excellent results were obtained by making the friction of the operating oil low. However, when a high-density operating oil is merely applied, the damping force becomes excessively high, and therefore, the evaluation results after adjusting the damping force value to a predetermined value by means of valve adjustment are shown as (5)' in FIG. 2. More balanced evaluation results are obtained by means of valve adjustment.

[Density of Base Oil]

The density of the base oil that is used for the shock absorber in the present invention is preferably 0.87 g/cm$^3$ or more at a temperature of 15°C. When the density is not more than this value, the degree of improvement in handling stability and riding comfort is small against the conventional products. In addition, the density of the operating oil is preferably in a range of from 0.87 to 1.0 g/cm$^3$, and more preferably in a range of from 0.89 to 0.94 g/cm$^3$.

The composition and the change in density of the operating oil are shown in FIG. 1. FIG. 1 shows a relation between the proportion of a polyalkylene glycol (PAG) in the base oil including the polyalkylene glycol and a fatty acid diester and the density of the base oil. The density of PAG is 0.96 g/cm$^3$, and in order to provide an operating oil having a density of 0.87 g/cm$^3$ or more, it is necessary that PAG is contained in an amount of about 17% by weight. In addition, there is no hindrance in mixing of a base oil utilized as an operating oil, such as a mineral oil, etc. In order to provide an operating oil having a density of 0.89 g/cm$^3$ or more, it is necessary that PAG is contained in an amount of about 40% by weight (the amount of the fatty acid diester is about 60% by weight).

[Composition of Base Oil]

The base oil that is used in the present invention includes, for example, a fatty acid diester and a polyalkylene glycol, and its density is 0.87 g/cm$^3$ or more at a temperature of 15°C.

With respect to the polyalkylene glycol that constitutes the base oil in the present invention, though there is no particular reason for limiting its composition and blending proportion, there is no hindrance so long as the density of the operating oil prepared is 0.87 g/cm$^3$ or more. In addition, there is no hindrance in mixing of a base oil utilized as an operating oil, such as a mineral oil, etc. By mixing a poly-alfa-olefin or a lubricating oil classified as GIII according to the classification of API instead of the fatty acid diester, the matter that the operating oil swells the rubber material as a seal material may be controlled.

[Additive]

The operating oil for shock absorber of the present invention may be blended with a viscosity index improver, a dispersant, an antioxidant, a friction modifier, an extreme pressure agent, a metal inactivating agent, a pour point depressant, a defoaming agent, etc.

As the viscosity index improver, for example, a polymethacrylate, an olefin-based copolymer, such as an ethylene-propylene copolymer, etc., a dispersion type olefin-based copolymer, and a styrene-based copolymer, such as a styrene-diene hydrogenated copolymer, etc., are used solely or in combination of two or more thereof.

As the antioxidant, for example, a phenol-based antioxidant, such as 2,6-di-t-butyl-4-methylphenol, 4,4'-methylenebis-(2,6-di-t-butylphenol), etc., an amine-based antioxidant, such as an alkylated diphenylamine, phenyl-$\alpha$-naphthylamine, an alkylated-$\alpha$-naphthylamine, etc., a dialkyl dithiopropionate, a dialkyl dithiocarbamic acid derivative (exclusive of metal salts), bis(3,5-di-t-butyl-4-hydroxybenzyl) sulfide, mercapto benzothiazole, a reaction product between phosphorus pentoxide and an olefin, and a sulfur-based antioxidant, such as dicetyl sulfide, etc., are used solely or in combination of two or more thereof. In particular, a phenol-based or amine-based antioxidant, or a zinc alkyl dithiophosphate, and mixtures thereof, and the like are preferably used.

As a detergent dispersant, for example, an alkenyl succinimide is used. Such a detergent dispersant is typically blended in an amount of 0.1% by mass or more and 10% by mass or less. As the metal inactivating agent, for example, benzotriazole, thiadiazole, and the like are used solely or in combination of two or more thereof.

As the pour point depressant, for example, a polymethacrylate and the like are used. As an anti-wear agent, for example, a zinc alkyl dithiophosphate is used. As the antifoaming agent, for example, a silicone-based compound, an ester-based compound, and the like are used solely or in combination of two or more thereof. As the extreme pressure agent, for example, tricresyl phosphate is used. Such an extreme pressure agent is typically blended in an amount of 0.1% by mass or more and 10% by mass or less. As the friction modifier, a long-chain alkyl carboxylic acid and a derivative thereof, a long-chain alkyl phosphoric acid and a derivative thereof, at least one phosphorus-containing compound selected from a phosphoric acid monoester, a phosphoric acid diester, and a phosphorous acid monoester, each having a hydrocarbon group having 1 to 20 carbon atoms, a long-chain alkyl amine, an amide, an imide and a derivative thereof, an oil-soluble molybdenum compound, and the like is used.

EXAMPLES

[Test of Swelling of Rubber Material by Shock Absorber Operating Oil]

The test of swelling of rubber material by shock absorber operating oil conformed to the method prescribed in JIS K6250. The swelling of a rubber material that is used for a shock absorber is required to fall within +15% in terms of a rate of volume change.

[Measurement Method of Density of Operating Oil]

The measurement method of density of operating oil is one described below and conformed to the method prescribed in JIS K2249.

[Measurement Method of Coefficient of Friction]

The measurement of coefficient of friction was performed in the following method and conformed to the method prescribed by the above-described Bowden-Leben type reciprocating sliding friction test.

[Test Method by Actual Vehicle]

In examining performances of the operating oil for shock absorber of the present invention by an actual vehicle, a passenger car mounted with a turboengine with a displacement of 3 liters was used, and operating oils of all of mounted shock absorbers were replaced by operating oils for test, respectively. The evaluation at the time of travelling is one summarized as sensory analysis results of feelings by plural test drivers when each driver got during long-distance travelling. The evaluation at the time of travelling is one summarized as sensory analysis results by plural test drivers when each driver got during long-distance travelling of several ten kilometers.

As for the test items as carried out, the riding comfort was evaluated in terms of high-frequency vibration. The handling stability was evaluated in terms of straight line stability, steering feeling, and roll feeling.

The meaning adopted regarding each of the evaluation items is as follows.

High-frequency vibration: Number of high-frequency input
Straight line stability: Stability at the time of straight line traveling of vehicle
Stirring feeling: Response at the time of stirring
Roll feeling: Roll rate and roll amount at the time of stirring

An operating oil for test having a density of 0.939 g/cm$^3$ and an operating oil having a blend of a reference oil having a density of 0.839 g/cm$^3$ were prepared and used. By making these operating oils even so as to have a coefficient of friction (@0.06 mm/s) of about 0.01, a deflection in test results based on a difference of the coefficient of friction was excluded, whereby influences by only the difference in density of the operating oil against the controllability and riding comfort were grasped.

In order to exclude the influence by a phenomenon where the damping force varies with a change of density of the operating oil, the valve of the shock absorber was adjusted to provide the same condition, and the test was then performed.

In addition, as comparative oils, two kinds of a middle-friction oil having a coefficient of friction of 0.018 and a high-friction oil having a coefficient of friction of 0.33 were prepared while making the density even at 0.839 g/cm$^3$, and tested.

(Example 1-1)

In the present Example, swelling properties of a polyacrylonitrile butadiene rubber by an operating oil having the following composition were tested.

[Operating Oil Composition]

Polyalkylene glycol: (Polybutoxy, polypropoxy)decanol ether (MW: 1,030) base oil, 98.371 wt% $\times$ 80% = 78.697 wt%

As a fatty acid diester, maleic acid isopropyl diester base oil, 98.371 wt% $\times$ 20% = 19.764 wt%

To 98.371 wt% of the base oil composed of the foregoing composition, the following compounds were added as additives, to prepare an operating oil.

Dispersant composed of a reaction product between isostearic acid and tetraethylenepentamine: 0.5 wt%

Antioxidant composed of dibutylhydroxytoluene: 0.3 wt%

Friction modifier composed of phosphate ester: 0.5 wt%

Extreme pressure agent composed of tricresyl phosphate: 0.3 wt%

Metal inactivating agent composed of benzotriazole: 0.03 wt%

Defoaming agent composed of dimethyl polysiloxane: 0.001 wt%

A density of this operating oil was 0.939 g/cm$^3$ according to the measurement method of JIS 2249. In addition, its coefficient of friction was 0.009 (@0.06 mm/s) according to the measurement method of the Bowden-Leben type friction test.

[Test Results]

The rate of volume change of the rubber material according to the test of swelling properties of rubber material by the above-described shock absorber operating oil was 12.3%, a value of which was satisfied with the prescribed value of +15%. In addition, it became clear from the actual vehicle test that the handling stability and the riding comfort were improved similarly to the following Examples.

(Example 1-2)

An operating oil in which a poly-alfa-olefin having a pour point of -57°C and a density of 0.79 was blended in an amount of 60% by weight in place of the fatty acid diester in Example 1 was prepared and measured for the volume change of rubber material. As a result, there was revealed the result that the rate of volume change fell within +15%. It became clear from the actual vehicle test that the handling stability and the riding comfort were improved similarly to the following Examples.

(Example 1-3)

An operating oil in which GIII: S-oil U, S2 was blended in an amount of 70% by weight in place of the fatty acid diester in Example 1 was prepared and measured for the volume change of rubber material. As a result, there was revealed the result that the rate of volume change fell within +15%. It became clear from the actual vehicle test that the handling stability and the riding comfort were improved similarly to the following Examples.

(Example 1-4)

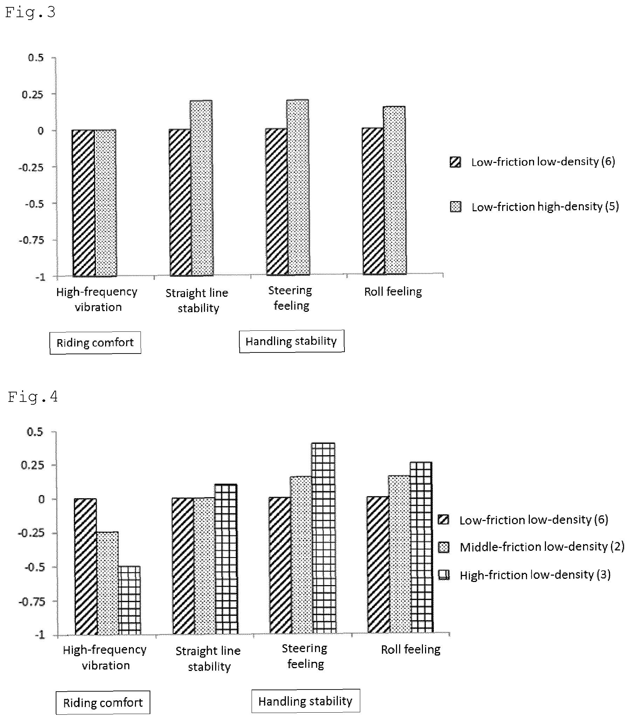

In the present Examples, operating oils with a varied coefficient of friction were prepared and subjected to the actual vehicle test regarding the handling stability and the riding comfort. The operating oils used are two kinds of operating oils having a low density and a varied coefficient of friction inclusive of a middle-friction oil (coefficient of friction: 0.018, density: 0.84 g/cm$^3$) and a high-friction oil (coefficient of friction: 0.33, density: 0.84 g/cm$^3$). Furthermore, a reference oil (low-friction: coefficient of friction: 0.01, low-density: density: 0.84 g/cm$^3$) was added, and three kinds of operating oils were tested under the same conditions, the results of which are shown in FIG. 4. It is noted from FIG. 4 that by increasing the coefficient of friction, though the overall stirring stability is improved, the high-frequency vibration, namely the performance according to the riding comfort is worsened.

In addition, two kinds of operating oils of a high-density low-friction oil (density: 0.939 g/cm$^3$, coefficient of friction: 0.009) and a low-density low-friction oil (density: 0.839 g/cm$^3$, coefficient of friction: 0.010) were tested under the same conditions, the results of which are shown in FIG. 3. It is noted from FIG. 3 that by increasing the density, the overall stirring stability is improved.

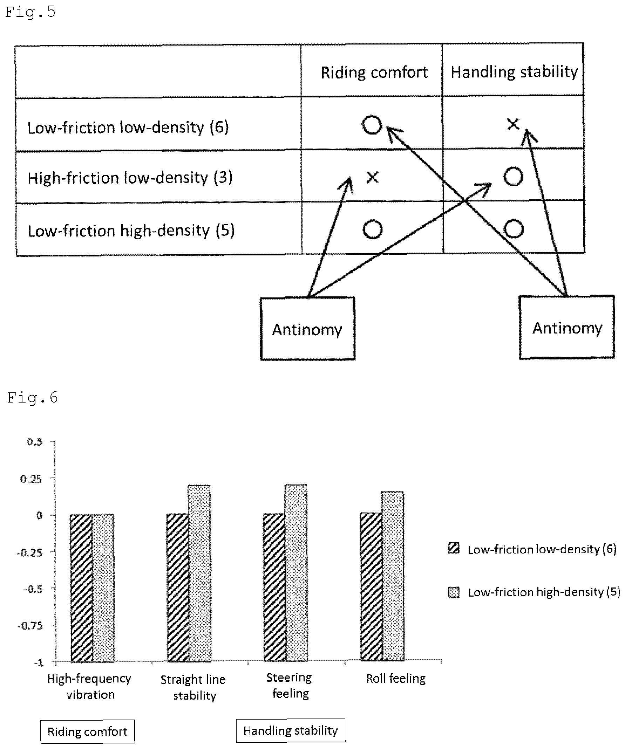

When the test results shown in FIG. 4 and FIG. 3 are compared with each other and evaluated in conformity with traveling by an actual vehicle, a summary can be made as shown in FIG. 5. In the low-friction oil, though the riding comfort is good, the handling stability is not good. That is, in the low-friction oil, the riding comfort and the handling stability cannot be satisfied at the same time. In addition, in the high-friction oil, though the handling stability is good, the riding comfort is not good. That is, in the high-friction oil, the riding comfort and the handling stability cannot be satisfied at the same time. From these test results, it is recognized that each of the low-friction oil and the high-friction oil involves a defect, and this defect cannot be overcome through adjustment of the coefficient of friction.

However, by combining the test results of Example 1 and so on, it has become clear that such a defect is overcome by the operating oil that is provided with both a low friction and a high density.

(Summary of Examples 1-1 to 1-4)

In the light of the above, the invention that can be grasped from Examples 1-1 to 1-4 is concerned with an operating oil for shock absorber coming into contact with a rubber material, the operating oil comprising containing a polyalkylene glycol and at least one base oil selected from a fatty acid diester, a poly-alfa-olefin, and a lubricating oil classified as GIII in American Petroleum Institute (API), and gives rise to an effect of making it possible to use a chemical synthetic oil as a lubricating oil through a minimum material change of adjusting a composition of a base oil.

(Example 2-1)

[Operating Oil Composition of Present Invention]

To 98.371 wt% of a base oil composed of a composition of a polypropylene glycol diester, the following compounds were added as additives, to prepare an operating oil.

Dispersant composed of a reaction product between isostearic acid and tetraethylenepentamine: 0.5 wt%
Antioxidant composed of dibutylhydroxytoluene: 0.3 wt%
Friction modifier composed of phosphate ester: 0.5 wt%
Extreme pressure agent composed of tricresyl phosphate: 0.3 wt%
Metal inactivating agent composed of benzotriazole: 0.03 wt%
Defoaming agent composed of dimethyl polysiloxane: 0.001 wt%

A density of this operating oil was 0.939 $g/cm^3$ according to the measurement method of JIS 2249. In addition, its coefficient of friction was 0.009 (@0.06 mm/s) according to the measurement method of the Bowden-Leben type friction test.

[Reference Oil]

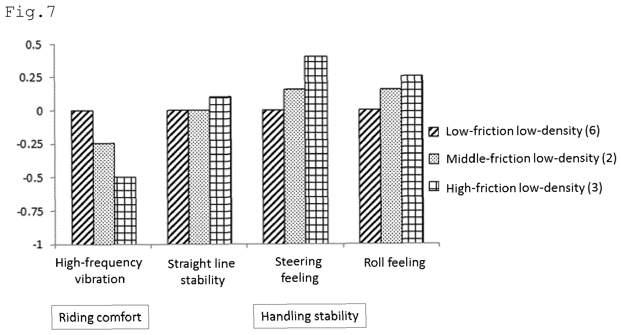

A reference oil having a density of 0.839 $g/cm^3$ and a coefficient of friction (@0.06 mm/s) of 0.010 was prepared for comparison. The test results were evaluated in terms of a relative value to the reference oil. The value of zero in FIGs. 6 and 7 shows the evaluation of the reference oil, and it is demonstrated that as the value becomes more plus, excellent results were obtained, whereas when the value becomes more minus, inferior results were obtained.

[Test Results]

FIG. 6 shows the evaluation results of the high-density operating oil of the present invention and the reference oil. In the high-density operating oil, excellent results in the high-frequency vibration, the stirring feeling, the roll feeling, and the straight line stability were obtained. From these test results, it has become clear that by increasing the density of the operating oil, the both characteristics of the handling stability and the riding comfort are improved.

(Example 2-2)

In the present Examples, operating oils with a varied coefficient of friction were prepared and subjected to the actual vehicle test regarding the handling stability and the riding comfort. The operating oils used are two kinds of operating oils having a low density and a varied coefficient of friction inclusive of a middle-friction oil (coefficient of friction: 0.018, density: 0.84 $g/cm^3$) and a high-friction oil (coefficient of friction: 0.33, density: 0.84 $g/cm^3$). Furthermore, a reference oil (low-friction: coefficient of friction: 0.01, low-density: density: 0.84 $g/cm^3$) was added, and three kinds of operating oils were tested under the same density conditions, the results of which are shown in FIG. 7. It is noted from FIG. 7 that by increasing the coefficient of friction, though the overall stirring stability is improved, the high-frequency vibration, namely the performance according to the riding comfort is worsened.

When these results and the test results of the high density oil shown in FIG. 6 are compared with each other and evaluated in conformity with traveling by an actual vehicle, a summary can be made as shown in FIG. 8 similar to FIG. 5. In the low-friction oil, though the riding comfort is good, the handling stability is not good. That is, in the low-friction oil, the riding comfort and the handling stability cannot be satisfied at the same time. In addition, in the high-friction oil, though the handling stability is good, the riding comfort is not good. That is, in the high-friction oil, the riding comfort and the handling stability cannot be satisfied at the same time. From these test results, it is recognized that each of the low-friction oil and the high-friction oil involves a defect, and this defect cannot be overcome through adjustment of the coefficient of friction.

However, by combining the test results of Example 2-1 and so on, it has become clear that such a defect is overcome by the operating oil that is provided with both a low friction and a high density.

(Summary of Examples 2-1 to 2-2)

In the light of the above, the invention that can be grasped from Examples 2-1 to 2-2 is concerned with an operating oil for hydraulic shock absorber including, as a base oil, a fatty acid diester and/or a polyalkylene glycol, the operating oil comprising having a density of 0.87 g/cm$^3$ or more at a temperature of 15°C. By using a high-density operating oil for a shock absorber, there are brought such effects that compressibility of the operating oil is reduced, and responsibility of the damping force is improved, thereby enabling one to improve the riding comfort and the handling stability.

[Summary of Present Invention]

In summary, the present invention is concerned with (1) an operating oil including, as a base oil, a fatty acid diester and/or a polyalkylene glycol, the operating oil comprising having a density of 0.87 g/cm$^3$ or more at a temperature of 15°C. The present invention gives rise to an effect that it is possible to use a chemical synthetic oil as a lubricating oil through a minimum material change of adjusting a composition of a base oil; an effect that influences of an operating oil containing, as a base oil, a polyalkylene glycol capable of reducing swelling properties of a rubber material in a chemical synthetic oil, against the rubber material can be reduced; an effect that by using a high-density operating oil for a shock absorber, compressibility of the operating oil is reduced, and responsibility of a damping force is improved, thereby enabling one to improve riding comfort and handling stability; and an effect that though conventionally, it was difficult to make both riding comfort and handling stability compatible with each other within satisfactory ranges, it becomes possible to make the both compatible with each other in high levels, particularly remarkable improvements in high-frequency vibration, straight line stability, stirring feeling, and roll feeling can be achieved. Also, the present invention includes the following embodiments (2) to (13).

(2) The operating oil as set forth in the above item (1), wherein the fatty acid diester is an ester of a fatty acid as a dibasic acid and an alcohol, or an ester of a polyhydric alcohol and a fatty acid.

(3) The operating oil as set forth in the above item (1), wherein the polyalkylene glycol has a carbon-chain oxyalkylene group having 1 to 7 carbon atoms.

(4) The operating oil as set forth in the above item (1), wherein the fatty acid diester is an ester of a fatty acid as a dibasic acid and an alcohol, or an ester of a polyhydric alcohol and a fatty acid, and the polyalkylene glycol has a carbon-chain oxyalkylene group having 1 to 7 carbon atoms.

(5) The operating oil as set forth in any of the above items (1) to (4), which is an operating oil for shock absorber.

(6) The operating oil as set forth in the above item (5), wherein a density of the operating oil is in a range of from 0.87 to 1.00 g/cm$^3$.

(7) The operating oil as set forth in the above item (5), wherein a base oil of the operating oil is contained in an amount of 80 to 99.5% by weight.

(8) The operating oil as set forth in the above item (5), wherein a base oil of the operating oil is composed of a polyalkylene glycol and a chemical synthetic oil, and a proportion of the polyalkylene glycol in the base oil is 17% by weight or more.

(9) The operating oil as set forth in the above item (5), which is an operating oil having a coefficient of friction in a range of 0.012 or less as measured under a condition of 0.06 m/s.

(10) The operating oil as set forth in the above item (1), which is an operating oil coming into contact with a rubber material, the operating oil containing the polyalkylene glycol and at least one base oil selected from a fatty acid diester, a poly-alfa-olefin, and a lubricating oil classified as GIII in American Petroleum Institute (API).

(11) The operating oil as set forth in the above item (10), wherein at least one selected from the fatty acid diester, the poly-alfa-olefin, and the lubricating oil classified as GIII in American Petroleum Institute (API) is contained in an amount of 5 to 60% by weight in the base oil.

(12) The operating oil as set forth in the above item (10), the rubber material is any of a nitrile rubber, a hydrogenated nitrile rubber, and a fluorocarbon rubber.

(13) A shock absorber comprising using the operating oil as set forth in any of the above items (10) to (12) and the rubber material.

INDUSTRIAL APPLICABILITY

The operating oil for shock absorber in the present invention has a composition in which influences against a rubber material are reduced and is useful for improving durability of members or preventing oil leakage. In addition, by allowing this operating oil to have a high density, handling stability and riding comfort are remarkably improved. When the operating oil is satisfied with a low coefficient of friction and a high density at the same time, these characteristics will be more improved. The operating oil for shock absorber of the present invention is suitable especially for a passenger car attaching importance to riding comfort and is able to make utilization of a passenger car comfortable for a driver and a passenger. It is to be noted that the operating oil of the present invention may be applied not only as an operating oil of shock absorber of a passenger car but also as an operating oil of a damper of a railway, or the like.

The operating oil of the present invention is usable for any of a multiple-cylinder type shock absorber and a single-cylinder type shock absorber. In addition, the operating oil of the present invention is also usable for a shock absorber of any of four-wheeled vehicles and two-wheeled vehicles, and in particular, is suitably used for four-wheeled vehicles.

In addition, in view of the fact that the operating oil for shock absorber in the present invention has a high density, the handling stability and the riding comfort are remarkably improved. The operating oil that is satisfied with a low coefficient of friction and a high density at the same time will further improve the foregoing characteristics. The operating oil for shock absorber of the present invention is suitable especially for a passenger car attaching importance to riding comfort and is able to make utilization of a passenger car comfortable for a driver and a passenger.

The operating oil of the present invention is usable for any of a multiple-cylinder type shock absorber and a single-cylinder type shock absorber. In addition, the operating oil of the present invention is also usable for a shock absorber of any of four-wheeled vehicles and two-wheeled vehicles, and in particular, is suitably used for four-wheeled vehicles.

**Claims**

1. An operating oil comprising, as a base oil, a fatty acid diester and/or a polyalkylene glycol, the operating oil having a density of 0.87 g/cm$^3$ or more at a temperature of 15°C.

2. The operating oil according to claim 1, wherein the fatty acid diester is an ester of a fatty acid as a dibasic acid and an alcohol, or an ester of a polyhydric alcohol and a fatty acid.

3. The operating oil according to claim 1, wherein the polyalkylene glycol has a carbon-chain oxyalkylene group having 1 to 7 carbon atoms.

4. The operating oil according to claim 1, wherein the fatty acid diester is an ester of a fatty acid as a dibasic acid and an alcohol, or an ester of a polyhydric alcohol and a fatty acid, and the polyalkylene glycol has a carbon-chain oxyalkylene group having 1 to 7 carbon atoms.

5. The operating oil according to any of claims 1 to 4, which is an operating oil for shock absorber.

6. The operating oil according to claim 5, wherein a density of the operating oil is in a range of from 0.87 to 1.00 g/cm$^3$.

7. The operating oil according to claim 5, wherein a base oil of the operating oil is contained in an amount of 80 to 99.5% by weight.

8. The operating oil according to claim 5, wherein a base oil of the operating oil is composed of a polyalkylene glycol and a chemical synthetic oil, and a proportion of the polyalkylene glycol in the base oil is 17% by weight or more.

9. The operating oil according to claim 5, which is an operating oil having a coefficient of friction in a range of 0.012 or less as measured under a condition of 0.06 m/s.

10. The operating oil according to claim 1, which is an operating oil coming into contact with a rubber material, the operating oil containing the polyalkylene glycol and at least one base oil selected from a fatty acid diester, a poly-alfa-olefin, and a lubricating oil classified as GIII in American Petroleum Institute (API).

11. The operating oil according to claim 10, wherein at least one selected from the fatty acid diester, the poly-alfa-olefin, and the lubricating oil classified as GIII in American Petroleum Institute (API) is contained in an amount of 5 to 60% by weight in the base oil.

12. The operating oil according to claim 10, the rubber material is any of a nitrile rubber, a hydrogenated nitrile rubber, and a fluorocarbon rubber.

13. A shock absorber comprising using the operating oil as according to any of claims 9 to 12 and the rubber material.

Fig.1

Fig.2

Fig.3

Fig.4

Fig.5

|  | Riding comfort | Handling stability |
|---|---|---|
| Low-friction low-density (6) | ○ | × |
| High-friction low-density (3) | × | ○ |
| Low-friction high-density (5) | ○ | ○ |

Antinomy

Antinomy

Fig.6

☑ Low-friction low-density (6)

▨ Low-friction high-density (5)

High-frequency vibration    Straight line stability    Steering feeling    Roll feeling

Riding comfort       Handling stability

Fig.7

## INTERNATIONAL SEARCH REPORT

| | International application No. |
|---|---|
| | PCT/JP2016/059901 |

**A.   CLASSIFICATION OF SUBJECT MATTER**
*C10M105/36*(2006.01)i, *C10M105/38*(2006.01)i, *C10M107/34*(2006.01)i,
*C10N20/00*(2006.01)n, *C10N30/00*(2006.01)n, *C10N40/06*(2006.01)n, *F16F9/32*
(2006.01)n
According to International Patent Classification (IPC) or to both national classification and IPC

**B.   FIELDS SEARCHED**

Minimum documentation searched (classification system followed by classification symbols)
C10M105/36, C10M105/38, C10M107/34, C10N20/00, C10N30/00, C10N40/06,
F16F9/32

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | JP 5-65491 A  (Tonen Corp.),<br>19 March 1993 (19.03.1993),<br>claims; paragraph [0064]; examples<br>(Family: none) | 1-13 |
| X | WO 2014/007879 A1  (BASF SE),<br>09 January 2014 (09.01.2014),<br>claims; examples<br>& JP 2015-514148 A       & US 2013/0270049 A1<br>& EP 2828327 A1 | 1-13 |
| X | JP 4-314794 A  (Tonen Corp.),<br>05 November 1992 (05.11.1992),<br>claims; examples<br>& US 5382374 A<br>claims; examples<br>& EP 453114 A1 | 1-7,9-13 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 April 2016 (08.04.16) | Date of mailing of the international search report<br>31 May 2016 (31.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2016/059901 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 3-285989 A  (Tonen Corp.), 17 December 1991 (17.12.1991), claims; page 1, right column, line 16 to page 2, upper left column, line 10; page 2, lower right column, lines 3 to 15; examples (Family: none) | 1-7,9-13 |
| X | WO 2010/005022 A1  (Idemitsu Kosan Co., Ltd.), 14 January 2010 (14.01.2010), claims; paragraph [0047]; examples & JP 5368444 B        & US 2011/0105373 A1 claims; paragraph [0083]; examples & EP 2302022 A1 | 1-13 |
| X | WO 2008/133233 A1  (Idemitsu Kosan Co., Ltd.), 06 November 2008 (06.11.2008), claims; paragraph [0069]; examples & JP 5220731 B          & US 2010/0130394 A1 claims; paragraph [0169]; examples & EP 2157159 A1 | 1-13 |
| X | JP 2003-119482 A  (New Japan Chemical Co., Ltd.), 23 April 2003 (23.04.2003), claims; examples (Family: none) | 1-13 |
| X | JP 2005-154726 A  (New Japan Chemical Co., Ltd.), 16 June 2005 (16.06.2005), claims; examples; paragraph [0211] (Family: none) | 1-13 |
| X | JP 2013-199549 A  (Idemitsu Kosan Co., Ltd.), 03 October 2013 (03.10.2013), claims; paragraph [0032]; examples & US 2015/0057203 A1 claims; paragraph [0067]; examples & WO 2013/141082 A1     & EP 2829594 A1 | 1-5,7-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014178014 A
- JP 2013181085 A
- JP 2011162723 A
- JP 2009227769 A
- JP 2011021111 A
- JP 9100481 A
- JP 8311473 A
- JP 2000192067 A
- JP 2012180535 A
- JP 2015040299 A
- JP 2004250504 A